# EUROPÄISCHE PATENTSCHRIFT

(11) **EP 1 826 080 B1**
(45) Veröffentlichungstag und Bekanntmachung des Hinweises auf die Patenterteilung: **19.11.2008**
(21) Anmeldenummer: 06110486.5
(22) Anmeldetag: 28.02.2006
(51) Int. Cl.: B60T 7/08, B60T 7/10

(54) **Betätigungsvorrichtung für eine Feststellbremse eines Kraftfahrzeuges**
Actuating device for a vehicle parking brake
Dispositif d'actionnement pour un frein d'estationement d'un véhicule

(43) Veröffentlichungstag der Anmeldung: 29.08.2007
(73) Patentinhaber: Ford Global Technologies, LLC, Dearborn, MI 48126 (US)
(72) Erfinder: Otto, Martin, 30171 Hannover (DE)
(74) Vertreter: Drömer, Hans-Carsten

(56) Entgegenhaltungen:
- EP-A- 1 067 031
- EP-A- 1 449 730
- DE-A1- 19 521 159
- FR-A- 1 405 455

## Beschreibung

Die vorliegende Erfindung betrifft eine Betätigungsvorrichtung für eine Feststellbremse eines Kraftfahrzeuges.

Gattungsgemäße Betätigungsvorrichtungen, wie sie z.B. aus DE 195 21 159 A1 oder DE 692 18 360 T2 bekannt sind, umfassen einen in einem Lagerbock schwenkbar gehaltenen Handbremshebel, der zur Betätigung der Feststellbremse des Kraftfahrzeuges von einer (niedrigen) Ruhestellung in eine (hohe) Bremsanziehungsstellung geschwenkt wird, in welcher der Handbremshebel durch eine Festsetzeinrichtung, die aus einem Sperrsegment und einer über eine Betätigungsstange bewegbaren Sperrklinke besteht, festsetzbar ist.

Bei derartigen Vorrichtungen ist der zum Anziehen der Feststellbremse dienende Handbremshebel typischerweise im Bereich der Mittelkonsole angebracht, wo er eine nicht unbeträchtlichen Ausdehnung in Fahrzeuglängsrichtung hat. In modernen Fahrzeugen, wie z. B. Vans, wird jedoch in zunehmendem Maße eine Raumausnutzung auch zwischen den Fahrzeugsitzen bis hin zur Mittelkonsole angestrebt, wobei gegebenenfalls sogar eine Begehbarkeit dieses Bereichs ermöglicht werden soll.

Es ist daher eine Aufgabe der vorliegenden Erfindung, eine Betätigungsvorrichtung für eine Feststellbremse eines Kraftfahrzeuges bereitzustellen, welche bei gutem Bedienungskomfort einen geringeren Platzbedarf insbesondere in Fahrzeuglängsrichtung aufweist.

Diese Aufgabe wird gemäß den Merkmalen des unabhängigen Patentanspruches 1 gelöst.

Bei einer gattungsgemäßen Betätigungsvorrichtung für eine Feststellbremse eines Kraftfahrzeuges ist wenigstens ein mit der Feststellbremse über Zugmittel in Wirkverbindung stehender Hebel um eine in Bezug auf den Fahrzeugaufbau ortsfeste erste Schwenkachse zwischen einer Ruhestellung und einer Bremsanziehungsstellung schwenkbar gelagert.

Erfindungsgemäß ist an dem wenigstens einen Hebel eine Stange um eine in Bezug auf den Fahrzeugaufbau bewegliche, zur ersten Schwenkachse parallele zweite Schwenkachse schwenkbar angelenkt, wobei die Stange ein Griffelement trägt und am Fahrzeugaufbau um eine in Bezug auf den Fahrzeugaufbau ortsfeste dritte Schwenkachse schwenkbar sowie entlang ihrer Längsrichtung verschiebbar gelagert ist.

Gemäß der Erfindung wird ein Aufbau geschaffen, bei welchem die Betätigung des wenigstens einen mit der Feststellbremse über Zugmittel in Wirkverbindung stehenden Hebels nicht unmittelbar (d. h. durch direktes Angreifen an diesem Hebel) erfolgt, sondern mittelbar über einer zugleich schwenkbar und längsverschieblich gelagerte Stangenkonstruktion. Bei diesem Aufbau erfolgt die zum Anziehen oder Lösen der Feststellbremse erforderliche Schwenkbewegung des Hebels zwischen seiner Ruhestellung und seiner Bremsanziehungsstellung somit über eine Hebelkonstruktion, welche die von dem Fahrer aufzubringende Kraft so umlenkt, dass der Fahrer das Griffelement mit einer weitgehend linearen, und zwar zumindest überwiegend vertikal nach oben gerichteten Bewegung führen kann. Dabei kann die gesamte Anordnung der erfindungsgemäß wesentlichen Elemente, d.h. insbesondere der an dem wenigstens einen Hebel angelenkten Stange(n) im Vergleich etwa zu einem einfachen, zum Anziehen oder Lösen der Feststellbremse unmittelbar betätigten Handbremshebel wesentlich kompakter in Bezug auf ihre Erstreckung in Fahrzeuglängsrichtung ausgeführt werden. Insbesondere wird eine besonderes Platz sparende Unterbringung des wenigstens einen Hebels ermöglicht, so dass dieser beispielsweise wenigstens zum Teil im Bereich unterhalb des Gangschalthebels untergebracht werden kann. Der im Bereich der Mittelkonsole eingesparte Platz kann folglich anderweitig, insbesondere in einem Van etwa zur Schaffung eines begehbaren Zwischenganges, genutzt werden. Außerdem verbleibt bei der erfindungsgemäßen Betätigungsvorrichtung im Bereich oberhalb der ersten Schwenkachse ein relativ großer Freiraum, der für weitere Elemente in der Mittelkonsole, wie z. B. Cupholder-Vertiefungen, genutzt werden kann.

Ein weiterer Vorteil der erfindungsgemäßen Anordnung besteht in einer im Hinblick auf die speziellen Anforderungen beim Anziehen der Feststellbremse besonders vorteilhaft angepassten Hebelwirkung: Während der Schwenkbewegung des Hebels von seiner Ruhestellung in die Bremsanziehungsstellung nimmt in der erfindungsgemäßen Anordnung die effektive Hebellänge des mittels des Hebels auf dessen (erste) Schwenkachse übertragbaren Drehmomentes kontinuierlich zu, so dass während der letzten Phase dieser Bewegung bei gleicher Kraftanstrengung ein stärkeres Drehmoment auf diese Schwenkachse und damit eine größere Zugkraft auf das vorzugsweise im Bereich dieser Achse befestigte Zugmittel (z. B. Drahtzug) ausgeübt wird. Dies ist insofern besonders vorteilhaft, als während der letzten Phase des Bremsanziehungsvorganges in der Regel eine größere Kraft zum Eintritt in die Bremsanziehungsstellung erforderlich ist und diese größere Kraft erfindungsgemäß gewissermaßen selbsttätig über die Zunahme der effektiven Hebellänge und ohne erhöhte Anstrengung des Fahrers bereitgestellt wird.

Gemäß einer bevorzugten Ausführungsform sind ein erster und ein zweiter Hebel vorgesehen, an welche jeweils eine erste und eine zweite Stange um die in Bezug auf den Fahrzeugaufbau bewegliche, zur ersten Schwenkachse parallele zweite Schwenkachse schwenkbar angelenkt ist, wobei die erste und die zweite Stange am Fahrzeugaufbau um die in Bezug auf den Fahrzeugaufbau ortsfeste dritte Schwenkachse schwenkbar sowie entlang ihrer Längsrichtung verschiebbar gelagert sind. Dabei können die erste und die zweite Stange vorzugsweise in einer zueinander parallelen Anordnung über das Griffelement starr miteinander verbunden sein. Durch diese Ausgestaltung wird zum einen eine erhöhte Stabilität der Anordnung insbesondere gegenüber Querkräften und zugleich eine besonders einfache Handhabung erreicht, da sich das Griffelement besonders leicht zur Betätigung durch den Fahrer greifen und nach oben ziehen lässt.

Gemäß einer bevorzugten Ausführungsform ist bzw. sind die Stange(n) jeweils in einem (Kunststoff-)Gleitlager gelagert, welches um die in Bezug auf den Fahrzeugaufbau ortsfeste dritte Schwenkachse (III) schwenkbar am Fahrzeugaufbau angelenkt ist. Durch die Verwendung eines schwenkbar gelagerten Gleitlagers werden die Reibungskräfte in der Betätigungsvorrichtung bei gleichzeitiger spielfreier Führung der Stangen minimiert, wodurch auch Feststellbremsen für relativ schwere Fahrzeuge (wie z. B. Vans) mit ergonomisch vertretbaren Betätigungskräften über relativ geringe Betätigungswege realisiert werden können.

Gemäß einer bevorzugten Ausführungsform ist dieses Gleitlager jeweils an einem in Bezug auf den Fahrzeugaufbau ortsfesten Trägerarm schwenkbar angelenkt, welcher sich im Wesentlichen bis in den Bereich der ersten Schwenkachse erstreckt, wodurch eine besonders stabile Anordnung erreicht wird. Der erste und der zweite Hebel sind weiter vorzugsweise in einer zueinander parallelen Anordnung starr miteinander verbunden, wodurch die Stabilität der Anordnung weiter erhöht wird.

Gemäß einer bevorzugten Ausführungsform ist bzw. sind die Stange(n) an dem jeweiligen Hebel sowie am Fahrzeugaufbau derart gelagert, dass der Winkel zwischen der jeweiligen Stange und dem an dieser angelenkten Hebel über den gesamten Schwenkweg des jeweiligen Hebels von der Ruhestellung bis zur Bremsanziehungsstellung nicht mehr als 90° beträgt. Auf diese Weise wird insofern eine ergonomisch besonders günstige Handhabung ermöglicht, als die Bewegung des Griffelementes mit ihrer in Fahrzeuglängsrichtung weisenden Komponente über den gesamten Schwenkweg der Hebel von der Ruhestellung bis zur Bremsanziehungsstellung nur in Fahrtrichtung nach vorne (d. h. zum Fahrer hin) erfolgt und z. B. eine ergonomisch ungünstige vom Fahrer wegweisende Schwenkbewegung (sog. S-Schlag) vermieden wird.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen erläutert. Es zeigen:
- Figuren 1 und 2: perspektivische Ansichten einer erfindungsgemäßen Betätigungsvorrichtung 1 für eine Feststellbremse eines Kraftfahrzeuges jeweils im gelösten Zustand;
- Figur 3: eine perspektivische Ansicht der Feststellbremse entsprechend Figur 2, jedoch in einem angezogenen Zustand; und
- Figur 4: eine perspektivische Ansicht der gelösten Feststellbremse im Einbaukon-text.

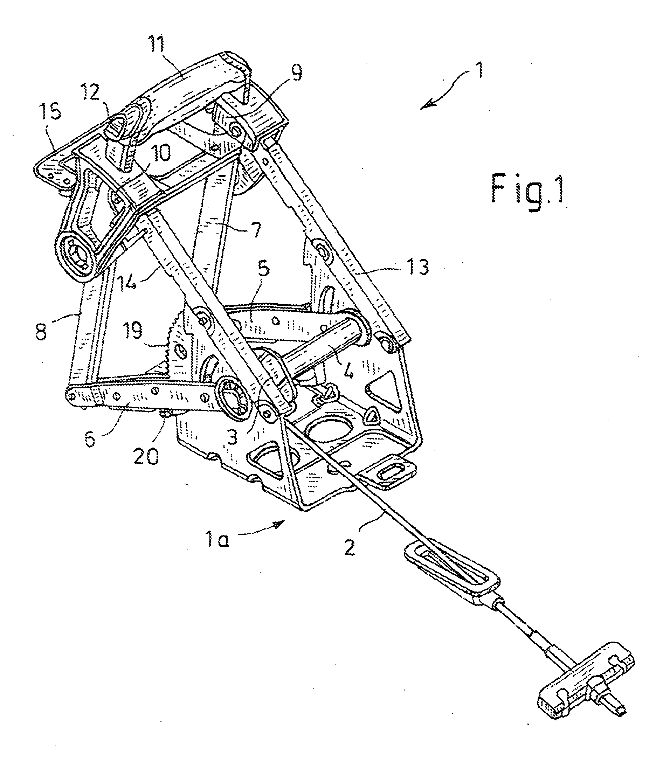

Die Figuren 1 bis 4 zeigen unterschiedliche perspektivische Ansichten einer erfindungsgemäßen Betätigungsvorrichtung 1 für eine Feststellbremse eines Kraftfahrzeuges. Die Betätigungsvorrichtung 1 dient gemäß Fig. 1-3 zum Aufbringen bzw. Lösen einer mechanischen Zugspannung auf einen Drahtzug 2, welcher in für sich bekannter Weise diese Zugspannung über einen Verteiler auf weitere Drahtzüge zum Anziehen bzw. Lösen von zwei oder mehr separaten Komponenten der Feststellbremse des Kraftfahrzeugs überträgt. Hierzu ist der Drahtzug 2 in ebenfalls bekannter Weise über ein an einer Achse 4 befestigtes Rollenelement 3 geführt, so der Drahtzug 2 mittels Drehen der Achse 4 mit einer Zugspannung beaufschlagbar ist. Die Achse 4 ist hierzu am Fahrzeugaufbau schwenkbeweglich gelagert und in ihren beiden Endabschnitten mit jeweils einem Hebel 5, 6 fest verbunden, wobei diese beiden Hebel 5, 6 ihrerseits über eine weitere Querstange 17 in zueinander paralleler Anordnung starr miteinander verbunden und somit gemeinsam um eine entlang der Achse 4 verlaufende, ortsfeste, mit "I" bezeichnete erste Schwenkachse zwischen fahrzeugaufbauseitigen Anschlägen schwenkbar sind.

Jeder der beiden Hebel 5, 6 trägt an seinem der ersten Schwenkachse I bzw. der Achse 4 entgegen gesetzten Längsende jeweils eine (über jeweils ein Gelenk 5a, 6a) schwenkbeweglich angelenkte Stange 7 bzw. 8 mit jeweils im Wesentlichen rechteckigem Querschnitt, wobei die beiden Stangen 7 und 8 ihrerseits über ein Griffelement 11 ebenfalls in zueinander paralleler Anordnung starr miteinander verbunden und somit gemeinsam um eine parallel zu der Achse 4 und damit zu der ersten Schwenkachse I verlaufende, jedoch infolge der Schwenkbarkeit der Hebel 5, 6 bewegliche zweite Schwenkachse 11 schwenkbar sind.

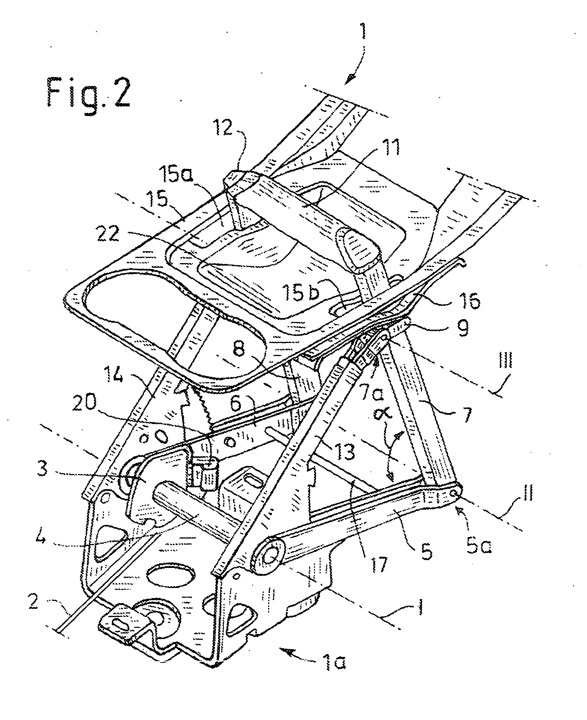

Wie am besten aus Fig. 2 ersichtlich, sind die Stangen 7, 8 jeweils in einem Gleitlager 9 bzw. 10 in Längsrichtung der Stangen 7, 8 verschiebbar geführt, wobei die Gleitlager 9, 10 ihrerseits an jeweils einem aufbauseitigen Träger 13 bzw. 14, welcher gemäß dem Ausführungsbeispiel zugleich die Achse 4 aufnimmt, schwenkbar angelenkt sind (über jeweils ein Gelenk 7a, 8a), so dass die Gleitlager 9, 10 und damit die von ihnen aufgenommenen Stangen 7, 8 um eine in Bezug auf den Fahrzeugaufbau ortsfeste, dritte Schwenkachse III schwenkbar sind. Diese Schwenkachse III wird durch das Ende der Träger 13 und 14 definiert und verläuft in unmittelbarer Nähe der Stangen 7 und 8 auf der der Schwenkachse I zugewandten Seite der Stangen.

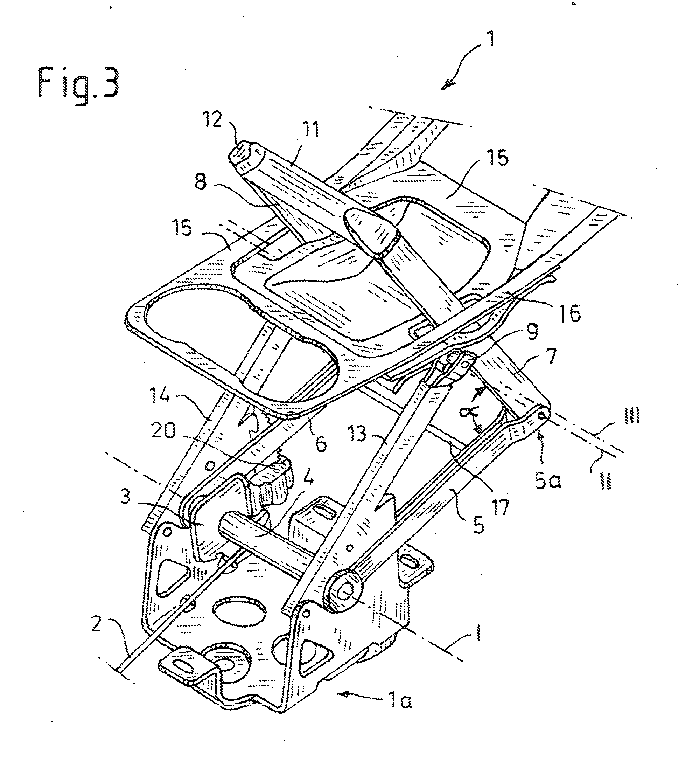

Ebenfalls in den Figuren erkennbar ist ein konsolenseitiges Abdeckelement 15. Die Stangen 7, 8 erstrecken sich durch in dem Abdeckelement 15 vorgesehene Aussparungen 15a, 15b hindurch nach oben, wobei diese Aussparungen 15a, 15b etwa zur Vermeidung des Hindurchfallens von Schmutzpartikeln oder dergleichen durch in Fig. 2 und 3 lediglich angedeutete Abdeckelemente 16 abgedeckt sind. Des Weiteren ist gemäß Fig. 2 an dem Griffelement 11 ein Knopf 12 vorgesehen, durch dessen Drücken eine in für sich bekannter Weise ausgestaltete Festsetzeinrichtung bestehend aus einem (in Fig. 1 erkennbaren) Sperrsegment 19 und einer Sperrklinkenanordnung 20 zum Festsetzen bzw. Freigeben der Hebelanordnung über einen in dem Griffelelement 11 und der Stange 8 über Umlenkrollen geführten (in den Figuren nicht sichtbare)n Drahtzug ver- bzw. entriegelbar ist. Das Abdeckelement 15 weist eine im mittleren Bereich eine Mulde 22 auf, die ein besseres Umgreifen des Griffelements 11 im gelösten Zustand der Feststellbremse erleichtert, andererseits auch zur Ablage von kleineren Gegenständen wie Münzen od. dgl. nutzbar ist.

Zur Betätigung der Feststellbremse(n) zieht der Fahrer nach Betätigung des Knopfes 12 an dem Griffelement 11 die beiden Stangen 7, 8 und damit die Hebel 5, 6 aus der in Fig. 2 gezeigten Ruhestellung in die in Fig. 3 gezeigte Bremsanziehungsstellung, wobei die hierbei vom Fahrer ausgeübte Krafteinleitung bzw. die von dem Griffelement 11 beschriebene Bahn überwiegend vertikal nach oben (und nur mit einer hierzu vergleichsweise geringen Komponente in Fahrtrichtung nach vorn) gerichtet ist, da die von dem Griffelement 11 beschriebene Bahn infolge der Lagerung der Stangen in den schwenkbeweglichen Gleitlagern 9, 10 entlang einer Kurve mit relativ großem Radius verläuft.

Dabei sind gemäß einer bevorzugten Ausführungsform die Stangen 7, 8 an dem jeweiligen Hebel 5 bzw. 6 sowie am Fahrzeugaufbau derart gelagert, dass der (in Fig. 2 und 3 mit α bezeichnete) Winkel zwischen der jeweiligen Stange 7, 8 und dem an dieser angelenkten Hebel 5, 6 über den gesamten Schwenkweg der Hebel 5 und 6 von der Ruhestellung bis zur Bremsanziehungsstellung (d.h. insbesondere in den in Fig. 2 und 3 gezeigten Stellungen) nicht größer als 90° ist. Dabei wird eine ergonomisch ungünstige, etwa Bewegungsbahn des Griffelementes 11 (S-Schlag) vermieden, da die Bewegung des Griffelementes 11 mit ihrer in Fahrzeuglängsrichtung weisenden Komponente über den gesamten Schwenkweg der Hebel 5, 6 von der Ruhestellung bis zur Bremsanziehungsstellung nur in Fahrtrichtung nach vorne (d.h. zum Fahrer hin) erfolgt, d. h., der Mittelpunkt des von dem Griffelement 11 über den Betätigungsweg beschriebenen Kreisbogenabschnitts liegt in Fahrtrichtung vor der Betätigungsvorrichtung.

Die Abmessungen der Hebelkonstruktion ist so gewählt, dass der Winkel α beim Anziehen der Feststellbremse größer wird und zu 90° hin tendiert, diesen Wert jedoch nicht erreicht. Dadurch wird die Kraftübertragung auf die Hebel 5, 6 zunehmend effektiver; d. h., die effektive Hebellänge der Hebel 5 und 6 steigt mit zunehmendem Anziehen der Feststellbremse ebenfalls an, was einen erwünschten Effekt darstellt.

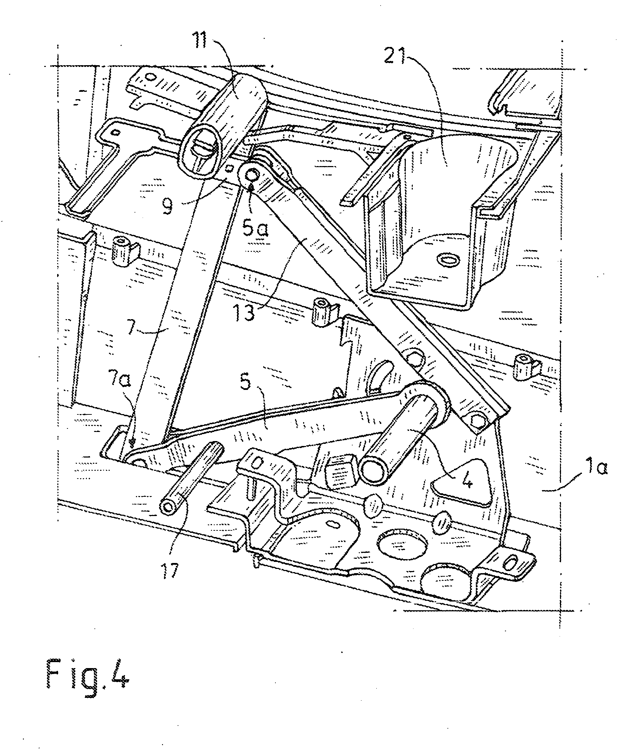

In Figur 4 ist die Einbausituation einer erfindungsgemäßen Betätigungsvorrichtung veranschaulicht. Die Vorrichtung kann in die Mittelkonsole nahe dem Gangschalthebel (nicht dargestellt) integriert werden, wobei die bei der erfindungsgemäßen Vorrichtung zwischen den beiden parallelen Hebeln verbleibenden Freiräume auch noch die Anordnung von Cupholder-Ausnehmungen 21 in der Mittelkonsole in etwa oberhalb der Schwenkachse 4 ermöglichen.

## Patentansprüche

1. Betätigungsvorrichtung für eine Feststellbremse eines Kraftfahrzeuges, mit wenigstens einem mit der Feststellbremse über Zugmittel (2) in Wirkverbindung stehenden Hebel (5), welcher um eine in Bezug auf den Fahrzeugaufbau ortsfeste erste Schwenkachse (I) zwischen einer Ruhestellung und einer Bremsanziehungsstellung schwenkbar gelagert ist,
**dadurch gekennzeichnet, dass**
an dem Hebel (5) eine Stange (7) um eine in Bezug auf den Fahrzeugaufbau bewegliche, zur ersten Schwenkachse (I) im Wesentlichen parallele zweite Schwenkachse (II) schwenkbar angelenkt ist, wobei die Stange (7) ein Griffelement (11) trägt und am Fahrzeugaufbau um eine in Bezug auf den Fahrzeugaufbau ortsfeste dritte Schwenkachse (III) schwenkbar sowie entlang ihrer Längsrichtung verschiebbar gelagert ist.

2. Betätigungsvorrichtung nach Anspruch 1,
**dadurch gekennzeichnet, dass**
ein erster und ein zweiter Hebel (5, 6) vorgesehen sind, an welche jeweils eine erste bzw. eine zweite Stange (7, 8) um die in Bezug auf den Fahrzeugaufbau bewegliche, zur ersten Schwenkachse (I) parallele zweite Schwenkachse (II) schwenkbar angelenkt ist, wobei die erste und die zweite Stange (7, 8) am Fahrzeugaufbau um die in Bezug auf den Fahrzeugaufbau ortsfeste dritte Schwenkachse (III) schwenkbar sowie entlang ihrer Längsrichtung verschiebbar gelagert sind.

3. Betätigungsvorrichtung nach Anspruch 2,
**dadurch gekennzeichnet, dass**
die erste und die zweite Stange (7, 8) in einer zueinander parallelen Anordnung vorzugsweise über das Griffelement (11) starr miteinander verbunden sind.

4. Betätigungsvorrichtung nach einem der Ansprüche 1 bis 3,
**dadurch gekennzeichnet, dass**
die Stange(n) (7, 8) jeweils in einem Gleitlager (9, 10) gelagert ist bzw. sind, welches um die in Bezug auf den Fahrzeugaufbau ortsfeste dritte Schwenkachse (III) schwenkbar am Fahrzeugaufbau angelenkt ist.

5. Betätigungsvorrichtung nach Anspruch 4,
**dadurch gekennzeichnet, dass**
das dieses Gleitlager (9, 10) jeweils an einem in Bezug auf den Fahrzeugaufbau ortsfesten Trägerarm (13, 14) schwenkbar angelenkt ist, welcher sich im Wesentlichen bis in den Bereich der ersten Schwenkachse (I) erstreckt.

6. Betätigungsvorrichtung nach einem der Ansprüche 2 bis 5,
**dadurch gekennzeichnet, dass**
der erste und der zweite Hebel (5, 6) in einer zueinander parallelen Anordnung starr miteinander verbunden sind.

7. Betätigungsvorrichtung nach einem der vorhergehenden Ansprüche,
**dadurch gekennzeichnet, dass**
die Stange(n) (7, 8) an dem jeweiligen Hebel (5, 6) sowie am Fahrzeugaufbau derart gelagert ist bzw. sind, dass der Winkel zwischen der jeweiligen Stange (7, 8) und dem an dieser angelenkten Hebel (5, 6) über den gesamten Schwenkweg des jeweiligen Hebels (5, 6) von der Ruhestellung bis zur Bremsanziehungsstellung nicht mehr als 90° beträgt.

8. Betätigungsvorrichtung nach einem der vorhergehenden Ansprüche,
**dadurch gekennzeichnet, dass**
die Stange(n) (7, 8) an dem jeweiligen Hebel (5, 6) sowie am Fahrzeugaufbau derart gelagert ist bzw. sind, dass das Griffelement (11) oder dergleichen sich über den gesamten Schwenkweg des jeweiligen Hebels (5, 6) von der Ruhestellung bis zur Bremsanziehungsstellung nur in einer Richtung, vorzugsweise in Fahrrichtung, bewegt.

## Claims

1. Actuating device for a parking brake of a motor vehicle, with at least one lever (5) which is operatively connected to the parking brake via traction means (2) and which is mounted such that it can pivot between a rest position and a brake application position about a first pivot axis (I) which is positionally fixed with respect to the vehicle body, wherein a rod (7) is coupled to the lever (5) such that it can pivot about a second pivot axis (II) which is moveable with respect to the vehicle body and is essentially parallel to the first pivot axis (I), the rod (7) bearing a handle element (11) and being mounted on the vehicle body such that it can pivot about a third pivot axis (III), which is positionally fixed with respect to the vehicle body, and such that it can be displaced along its longitudinal direction.

2. Actuating device according to Claim 1, wherein a first and a second lever (5, 6) are provided to which a respective first and second rod (7, 8) are coupled such that they can pivot about the second pivot axis (II), which is moveable with respect to the vehicle body and is parallel to the first pivot axis (I), the first and the second rods (7, 8) being mounted on the vehicle body such that they can pivot about the third pivot axis (III), which is positionally fixed with respect to the vehicle body, and such that they can be displaced along its longitudinal direction.

3. Actuating device according to Claim 2, wherein the first and the second rod (7, 8) are connected rigidly to each other in an arrangement parallel to each other, preferably via the handle element (11).

4. Actuating device according to one of Claims 1 to 3, wherein the rod(s) (7, 8) is or are in each case mounted in a sliding bearing (9, 10) which is coupled to the vehicle body such that it can pivot about the third pivot axis (III), which is positionally fixed with respect to the vehicle body.

5. Actuating device according to Claim 4, wherein this sliding bearing (9, 10) is coupled pivotably in each case to a support arm (13, 14) which is positionally fixed with respect to the vehicle body and extends essentially into the region of the first pivot axis (I).

6. Actuating device according to one of Claims 2 to 5, wherein the first and the second lever (5, 6) are connected rigidly to each other in an arrangement parallel to each other.

7. Actuating device according to one of the preceding claims, wherein the rod(s) (7, 8) is or are mounted on the respective lever (5, 6) and on the vehicle body in such a manner that the angle between the respective rod (7, 8) and the lever (5, 6) coupled to the latter is not more than 90° over the entire pivoting travel of the respective lever (5, 6) from the rest position to the brake application position.

8. Actuating device according to one of the preceding claims, wherein the rod(s) (7, 8) on the respective lever (5, 6) and on the vehicle body is or are mounted in such a manner that the handle element (11) or the like moves only in one direction, preferably in the driving direction, over the entire pivoting travel of the respective lever (5, 6) from the rest position to the brake application position.

## Revendications

1. Dispositif d'actionnement pour un frein de stationnement d'un véhicule automobile, comprenant au moins un levier (5) en liaison fonctionnelle avec le frein de stationnement par le biais de moyens de traction (2), lequel est monté de manière à pouvoir pivoter autour d'un premier axe de pivotement (I) fixe par rapport à la carrosserie du véhicule, entre une position de repos et une position de serrage du frein,
**caractérisé en ce**
**qu'**une tige (7) est articulée au levier (5) de manière à pouvoir pivoter autour d'un deuxième axe de pivotement (II) essentiellement parallèle au premier axe de pivotement (I) et mobile par rapport à la carrosserie du véhicule, la tige (7) portant un élément de préhension (11) et étant montée sur la carrosserie du véhicule de manière à pouvoir pivoter autour d'un troisième axe de pivotement (III) fixe par rapport à la carrosserie du véhicule et de manière à pouvoir coulisser le long de son étendue longitudinale.

2. Dispositif d'actionnement selon la revendication 1,
**caractérisé en ce que**
l'on prévoit un premier et un deuxième levier (5, 6), sur lesquels sont articulées à chaque fois une première, respectivement une deuxième tige (7, 8) pouvant pivoter autour du deuxième axe de pivotement (II) mobile par rapport à la carrosserie du véhicule, et parallèle au premier axe de pivotement (I), la première et la deuxième tige (7, 8) étant montées sur la carrosserie du véhicule de manière à pouvoir pivoter autour du troisième axe de pivotement (III) fixe par rapport à la carrosserie du véhicule et de manière à pouvoir coulisser le long de leur étendue longitudinale.

3. Dispositif d'actionnement selon la revendication 2,
**caractérisé en ce que**
la première et la deuxième tige (7, 8) sont connectées rigidement l'une à l'autre de préférence par le biais de l'élément de préhension (11), dans un agencement parallèle l'une par rapport à l'autre.

4. Dispositif d'actionnement selon l'une quelconque des revendications 1 à 3,
**caractérisé en ce que**
la ou les tiges (7, 8) sont montées à chaque fois dans un palier lisse (9, 10), qui est articulé à la carrosserie du véhicule de manière à pouvoir pivoter autour du troisième axe de pivotement (III) fixe par rapport à la carrosserie du véhicule.

5. Dispositif d'actionnement selon la revendication 4,
**caractérisé en ce que**
ce palier lisse (9, 10) est articulé à chaque fois de manière à pouvoir pivoter sur un bras de support (13, 14) fixe par rapport à la carrosserie du véhicule, qui s'étend essentiellement jusque dans la région du premier axe de pivotement (I).

6. Dispositif d'actionnement selon l'une quelconque des revendications 2 à 5,
**caractérisé en ce que**
le premier et le deuxième levier (5, 6) sont connectés rigidement l'un à l'autre dans un agencement parallèle l'un par rapport à l'autre.

7. Dispositif d'actionnement selon l'une quelconque des revendications précédentes,
**caractérisé en ce que**
la ou les tiges (7, 8) sont montées sur le levier respectif (5, 6) ainsi que sur la carrosserie du véhicule de telle sorte que l'angle entre la tige respective (7, 8) et le levier (5, 6) articulé à celle-ci, sur toute la course de pivotement de chaque levier (5, 6), depuis la position de repos jusqu'à la position de serrage du frein, ne soit pas supérieur à 90°.

8. Dispositif d'actionnement selon l'une quelconque des revendications précédentes,
**caractérisé en ce que**
la ou les tiges (7, 8) sont montées sur le levier respectif (5, 6) ainsi que sur la carrosserie du véhicule de telle sorte que l'élément de préhension (11) ou similaire se déplace sur toute la course de pivotement du levier respectif (5, 6), depuis la position de repos jusqu'à la position de serrage du frein, uniquement dans une direction, de préférence dans la direction de conduite.
